# EUROPÄISCHE PATENTSCHRIFT

(11) **EP 3 392 855 B1**
(45) Veröffentlichungstag und Bekanntmachung des Hinweises auf die Patenterteilung: **13.10.2021**
(21) Anmeldenummer: 17167059.9
(22) Anmeldetag: 19.04.2017
(51) Int. Cl.: G08B 29/20

(54) **VERFAHREN UND VORRICHTUNG ZUM ABGLEICH EINES RAUCHMELDERS**
METHOD AND DEVICE FOR CONFIGURING A SMOKE DETECTOR
PROCÉDÉ ET DISPOSITIF DESTINÉS À ALIGNER UN DÉTECTEUR DE FUMÉE

(43) Veröffentlichungstag der Anmeldung: 24.10.2018
(73) Patentinhaber: Siemens Schweiz AG, 8047 Zürich (CH)
(72) Erfinder: Allemann, Martin, 8620 Wetzikon (CH); Bachels, Thomas, 5636 Benzenschwil (CH); Duric, Aleksandar, 6300 Zug (CH); Suter, Erwin, 8006 Zürich (CH)
(74) Vertreter: Maier, Daniel Oliver

(56) Entgegenhaltungen:
- EP-A1- 1 376 506
- CN-A- 101 923 767
- CN-A- 105 136 978

## Beschreibung

Die Erfindung betrifft ein Verfahren zum Abgleich eines Rauchmelders (Abgleichverfahren) und eine nach dem Verfahren arbeitende Vorrichtung zum Abgleich eines Rauchmelders (Abgleichvorrichtung).

Rauchmelder sind oftmals aus preisgünstigen Komponenten, zum Beispiel LEDs, aufgebaut, die zum Teil erhebliche Unterschiede hinsichtlich ihrer charakteristischen Eigenschaften (Bauteilstreuung) aufweisen. Trotzdem sollen alle Rauchmelder möglichst dieselbe Ansprechempfindlichkeit haben. Dies ist nicht nur für den Einsatz im Felde relevant, sondern wird innerhalb gewisser Grenzen auch von den Zulassungsstellen verlangt.

Falls die Anforderungen an die Genauigkeit niedrig sind, können vorselektierte Komponenten verbaut werden oder der Rauchmelder kann durch Eintauchen eines streuenden oder reflektierenden Objekts in das Streuvolumen abgeglichen werden. Bei höheren Ansprüchen an die Genauigkeit kann das eintauchende Objekt als Streukörper ausgebildet sein, wie dies in der EP 0 658 264 B1 beschrieben ist.

Eine verbreitete Methode zum Abgleichen von Rauchmeldern ist das Abgleichen in einem sogenannten Rauchkanal. Dies ist aber sehr zeitintensiv. Um den nötigen Durchsatz für eine Massenproduktion zu erreichen, wird oftmals eine große Anzahl von Rauchmeldern auf einem Trägerblech montiert und gemeinsam im Rauchkanal getestet. Dabei stellt sich das Problem, dass aufgrund von Turbulenzen und Inhomogenitäten der Verteilung des durch den Rauchkanal strömenden Testaerosols nicht alle Rauchmelder den gleichen Aerosolverhältnissen ausgesetzt sind und somit Fehler entstehen. Ein Abgleich in einem Rauchkanal lässt sich zudem, vor allem aufgrund des Platzbedarfs des Rauchkanals, nur schwer in eine Serienproduktion integrieren.

Aus einer Beschreibung mit dem Titel "Distributed Optical Smoke Sensor Calibration" des britischen Unternehmens AW Technology Limited ist ein weiteres Verfahren zum Testen von Rauchmeldern bekannt. Dabei wird an einem Rauchkanal neben dem von diesem ohnehin umfassten Obscuration Sensor ein Streulichtsensor (Smoke Scatter Sensor) angebracht. Dieser arbeitet mit einem Gebläse, welches Aerosol aus dem Rauchkanal in eine Sensorkammer des Streulichtsensors fördert. An die Sensorkammer schließt ein Kanal an, in dem sich ein oder mehrere Rauchmelder befinden. Der Rauchkanal fungiert also gewissermaßen als Aerosolquelle für den durch den Kanal geleiteten Volumenstrom. Obwohl gemäß der Beschreibung eine Kalibrierung des in dem Kanal befindlichen Rauchmelders möglich sein soll, ist die Art und Weise, wie eine Kalibrierung erfolgen soll, nicht beschrieben.

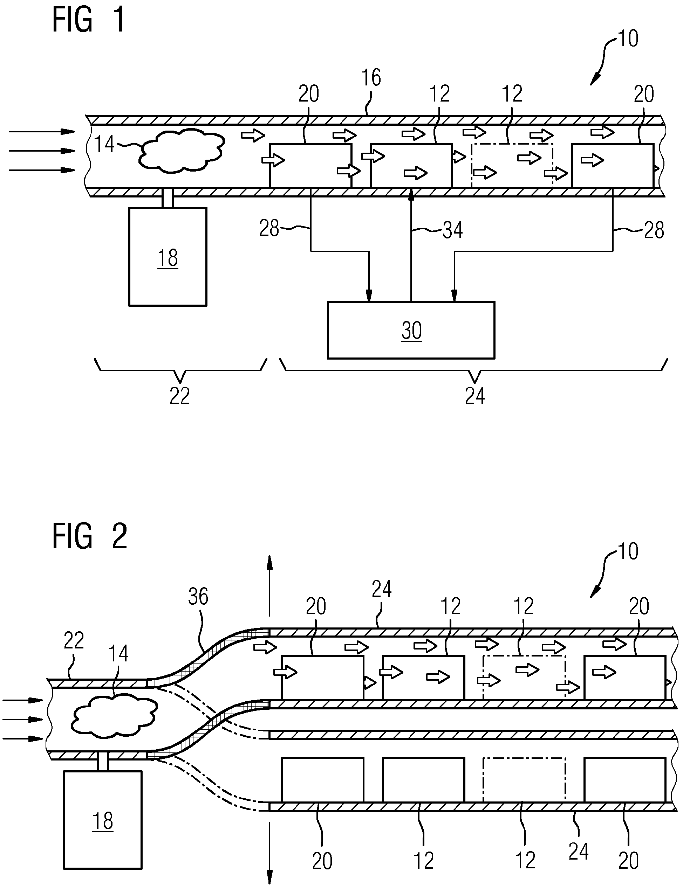

Aus der chinesischen Offenlegungsschrift CN 101 923 767 A ist eine Vorrichtung zur Selbstkalibrierung von Rauchmeldern bekannt. Die Vorrichtung umfasst einen Rauchbehälter mit einer Rauchzuführeinrichtung, einer Rauchumrühreinrichtung und einer Rauchkonzentrationsmesseinrichtung zur Einstellung einer vorgegebenen Rauchkonzentration mittels eines Controllers. Die Vorrichtung weist zudem einen fahrbaren Melderwagen auf, der in den Rauchbehälter eingefahren werden kann (siehe FIG. 1). Der Melderwagen umfasst zwei parallel zueinander angeordnete vertikale Seitenwände, die beidseitig mit zu kalibrierenden Rauchmeldern bestückt werden können (siehe FIG. 6). In Summe können 240 Rauchmelder auf einmal kalibriert werden. In den Seitenwänden sind Öffnungen vorhanden, um für die zu kalibrierenden Rauchmelder eine Umgebung mit vergleichsweiser homogener Rauchkonzentration bereitzustellen.

Eine Aufgabe der Erfindung besteht darin, ein einfaches und effizientes Verfahren zum Abgleich eines Rauchmelders und eine korrespondierende Vorrichtung anzugeben.

Diese Aufgabe wird erfindungsgemäß mittels eines Verfahrens zum automatischen Abgleich (Abgleichverfahren) zumindest eines Rauchmelders mit den Merkmalen des Anspruchs 1 gelöst. Bei dem Verfahren ist gemäß dem hier vorgeschlagenen Ansatz Folgendes vorgesehen: Der zumindest eine abzugleichende Rauchmelder ist in einem mit einem strömenden Aerosol beaufschlagten Kanal platziert. In dem Kanal befindet sich zusammen mit dem zumindest einen abzugleichenden Rauchmelder ein als Referenzmelder fungierender, bereits abgeglichener, insbesondere typgleicher Rauchmelder. Der Kanal weist zur Aufnahme des zumindest einen abzugleichenden Rauchmelders sowie des Referenzmelders jeweils ein Gehäuse auf. Die von dem Kanal umfassten Gehäuse sind mittels Rohrleitungsabschnitten untereinander verbunden, derart, dass jede Ausgangsseite eines Gehäuses mit einer Eingangsseite eines entlang des Kanals nachfolgenden Gehäuses verbunden ist. Der automatische Abgleich des zumindest einen Rauchmelders erfolgt, indem dieser mittels von dem Referenzmelder erhältlicher Daten abgeglichen wird.

Die oben genannte Aufgabe wird ebenfalls mittels einer zur Ausführung des Verfahrens bestimmten und eingerichteten Vorrichtung gelöst. Eine solche Vorrichtung zum automatischen Abgleichen (Abgleichvorrichtung) zumindest eines Rauchmelders umfasst einen mit einem strömenden Aerosol beaufschlagten Kanal. In dem Kanal ist der zumindest eine abzugleichende Rauchmelder zusammen mit einem als Referenzmelder fungierenden, bereits abgeglichenen, insbesondere typgleichen, Rauchmelder platziert. Der Kanal weist zur Aufnahme des zumindest einen abzugleichenden Rauchmelders sowie des Referenzmelders jeweils ein Gehäuse auf. Die von dem Kanal umfassten Gehäuse sind mittels Rohrleitungsabschnitten untereinander verbunden, derart, dass jede Ausgangsseite eines Gehäuses mit einer Eingangsseite eines entlang des Kanals nachfolgenden Gehäuses verbunden ist. Der automatische Abgleich des zumindest einen Rauchmelders erfolgt, indem mittels der Vorrichtung von dem Referenzmelder erhältliche Daten an den zumindest einen abzugleichenden Rauchmelder zu dessen Abgleich übermittelbar sind.

Für die weitere Beschreibung gilt zur Vermeidung unnötiger Wiederholungen, dass Merkmale und Details, die im Zusammenhang mit dem genannten Abgleichverfahren sowie eventueller Ausgestaltungen beschrieben sind, selbstverständlich auch im Zusammenhang mit und im Hinblick auf die zur Durchführung des Verfahrens eingerichtete Abgleichvorrichtung und umgekehrt gelten. Entsprechend kann das Abgleichverfahren auch mittels einzelner oder mehrerer Verfahrensmerkmale fortgebildet sein, die sich auf von der Abgleichvorrichtung ausgeführte Verfahrensschritte beziehen, und die Abgleichvorrichtung ebenso auch durch Mittel zur Ausführung von im Rahmen des Abgleichverfahrens ausgeführten Verfahrensschritten fortgebildet sein. Folglich gelten Merkmale und Details, die im Zusammenhang mit dem genannten Abgleichverfahren und eventueller Ausgestaltungen beschrieben sind, selbstverständlich auch im Zusammenhang mit und im Hinblick auf die zur Durchführung des Abgleichverfahrens bestimmte Abgleichvorrichtung und jeweils umgekehrt, so dass bezüglich der Offenbarung zu den einzelnen Aspekten der Erfindung stets wechselseitig Bezug genommen wird bzw. werden kann.

Der Vorteil der Erfindung besteht darin, dass der Abgleich des zumindest einen Rauchmelders automatisch und mittels eines als Referenzmelder fungierenden, bereits abgeglichenen Rauchmelders erfolgt. Der Abgleich auf diesem Wege ist vergleichsweise einfach und ebenso mit vergleichsweise geringem apparativen Aufwand zu realisieren. Spezielle Sensorik wird nicht benötigt, weil der Referenzmelder als Sensorik fungiert.

Der gemäß der hier vorgeschlagenen Neuerung erfolgende Abgleich des zumindest einen Rauchmelders ist ein Abgleich im Sinne einer Justierung und umfasst zumindest eine Messung und einen vom Ergebnis der Messung abhängigen Eingriff in den Rauchmelder. Die Messung liefert zumindest die von dem Referenzmelder erhältlichen Daten, die zum Beispiel als Normal verwendet werden. Der Eingriff in den Rauchmelder passt diesen entsprechend der von dem Referenzmelder erhältlichen Daten an. Der Abgleich erfolgt automatisch. Folglich geschieht der Eingriff in den Rauchmelder zum Beispiel in Form einer Anpassung von im Rauchmelder gespeicherten Daten. In diesem Zusammenhang ist darauf hinzuweisen, dass die im Rahmen des Abgleichs erfolgende Messung und der nachfolgende Eingriff in den jeweiligen Rauchmelder zwar unmittelbar nacheinander erfolgen können, aber auch zeitlich voneinander entkoppelt sein können.

Insofern ist bei einer besonderen Ausführungsform des Verfahrens zum Abgleich zumindest eines abzugleichenden Rauchmelders vorgesehen, dass zumindest die von dem Referenzmelder erhältlichen Daten zusammen mit einer den abzugleichenden Rauchmelder eindeutig identifizierenden Kennung in einer Datenbasis abgespeichert werden. Auf diese Daten kann später automatisch zugegriffen werden. Der Zugriff kann zum Beispiel durch den abzugleichenden Rauchmelder erfolgen, indem dieser mit seiner Kennung auf die Datenbasis zugreift und dabei die dort unter seiner Kennung gespeicherten Daten erhält. Mittels dieser Daten kann der jeweilige Rauchmelder einen automatischen Abgleich vornehmen. Die für einen solchen Zugriff auf die Datenbasis notwendigen kommunikativen Verbindungen bestehen zum Beispiel in Form eines Bussystems, an das der abzugleichende Rauchmelder in grundsätzlich an sich bekannter Art und Weise angeschlossen ist, eines Gateways oder dergleichen als Schnittstelle zwischen dem Bussystem und einem räumlich weiter reichenden Kommunikationsnetzwerk, zum Beispiel dem Internet, und eines solchen räumlich weiter reichenden Kommunikationsnetzwerks. Dieses lokale Abspeichern zumindest der von dem Referenzmelder erhältlichen Daten zusammen mit einer den abzugleichenden Rauchmelder eindeutig identifizierenden Kennung und der spätere Zugriff auf diese Daten stellt auch einen von der hier vorgeschlagenen Erfindung grundsätzlich unabhängigen Aspekt dar.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Abgleichverfahrens / der gegenständlichen Abgleichvorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Abgleichverfahren auch entsprechend der abhängigen Vorrichtungsansprüche weitergebildet sein kann und umgekehrt.

Bei einer Ausführungsform des Abgleichverfahrens befindet sich der Referenzmelder in dem Kanal stromaufwärts des zumindest einen abzugleichenden Rauchmelders und bei einer korrespondierenden Ausführungsform der Abgleichvorrichtung ist der Referenzmelder in dem Kanal stromaufwärts des zumindest einen abzugleichenden Rauchmelders platzierbar.

Bei einer weiteren Ausführungsform des Abgleichverfahrens und bei einer korrespondierenden Ausführungsform der Abgleichvorrichtung befindet sich in dem Kanal und bevorzugt stromabwärts des zumindest einen abzugleichenden Rauchmelders ein als weiterer Referenzmelder fungierender, bereits abgeglichener Rauchmelder, wobei von dem weiteren Referenzmelder erhältliche Daten zur Prüfung und/oder Korrektur des Abgleichs des zumindest einen abzugleichenden Rauchmelders verwendet werden. Die Prüfung kann zum Beispiel darin bestehen, dass - wie nachfolgend beschrieben - der Abgleich des zumindest einen Rauchmelders erst dann erfolgt, wenn der Referenzmelder und der zumindest eine weitere Referenzmelder im Wesentlichen gleiche Sensorsignale liefern, so dass dementsprechend von einer gleichmäßigen Verteilung des Aerosols in dem Kanal ausgegangen werden kann. Eine Korrektur des Abgleichs kann erfolgen, indem ein Mittelwert der von den zumindest zwei Referenzmeldern erhältlichen Abgleichsignale für den Abgleich verwendet wird.

Eine zusätzliche oder alternative Möglichkeit zur automatischen Erkennung einer gleichmäßigen Verteilung des Aerosols in dem Kanal besteht darin, dass eine zeitliche Änderung eines von dem Referenzmelder und/oder dem zumindest einen abzugleichenden Rauchmelder erhältlichen Sensorsignals überwacht wird.

Bei einer weiteren Ausführungsform des Abgleichverfahrens und bei einer korrespondierenden Ausführungsform der Abgleichvorrichtung erfolgt der Abgleich iterativ mit einer vorgegebenen oder vorgebbaren Schrittanzahl. In jedem einzelnen Schritt wird der zumindest eine abzugleichende Rauchmelder wie hier und im Folgenden beschrieben abgeglichen. Es besteht die Erwartung, dass nach einem ersten Schritt das von dem abzugleichenden Rauchmelder erhältliche Sensorsignal dem Referenzsignal besser entspricht. In einem zweiten Schritt und weiteren Schritten erfolgt ein erneuter Abgleich auf Basis der dann aktuellen Referenz- und Sensorsignale. Dieses iterative Abgleichverfahren wird beendet, wenn die jeweilige Schrittanzahl erreicht ist und/oder abgebrochen, wenn das Sensorsignal des abzugleichenden Rauchmelders innerhalb vorgegebener oder vorgebbarer Grenzen mit dem Referenzsignal übereinstimmt.

Bei einer besonderen Ausführungsform des Abgleichverfahrens und bei einer korrespondierenden Ausführungsform der Abgleichvorrichtung umfasst die Abgleichvorrichtung parallel zu einem Kanalabschnitt, indem sich der zumindest eine abzugleichende Rauchmelder befindet, zumindest einen weiteren Kanalabschnitt mit zumindest einem abzugleichenden Rauchmelder. Der Aerosolstrom kann entweder in den zuerst genannten Kanalabschnitt oder den weiteren Kanalabschnitt oder einen der weiteren Kanalabschnitte geleitet werden. Dafür wird der jeweilige Kanalabschnitt in den Aerosolstrom bewegt und die Abgleichvorrichtung ist dafür bestimmt und eingerichtet, dass jeweils ein Kanalabschnitt in den Aerosolstrom bewegt werden kann. Dafür ist zum Beispiel ein flexibles Zwischenstück vorgesehen, mittels dessen ein Zustromabschnitt des Kanals wahlweise mit einem Kanalabschnitt mit zumindest einem darin befindlichen abzugleichenden Rauchmelder verbindbar ist und beim Betrieb der Vorrichtung verbunden werden kann.

Die eingangs genannte Aufgabe wird auch mittels einer Abgleichvorrichtung der oben beschriebenen Art gelöst, welche eine die wesentlichen Funktionen der Abgleichvorrichtung bestimmende Steuerungseinheit umfasst. Die Steuerungseinheit ist damit ein Beispiel für von der Abgleichvorrichtung umfasste Mittel zur Ausführung des Abgleichverfahrens und ggf. spezieller Ausführungsformen des Abgleichverfahrens. Mittels der Steuerungseinheit ist ein als Steuerungsprogramm fungierendes Computerprogramm ausführbar und wird zur Ausführung des Abgleichverfahrens ausgeführt, welches den Abgleich des zumindest einen Rauchmelders bewirkt. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Steuerungseinheit oder eine Abgleichvorrichtung, in deren Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Steuerungsprogramms oder unter Kontrolle des Steuerungsprogramms erfolgen, sofern nicht ausdrücklich darauf hingewiesen ist, dass einzelne Aktionen durch einen Bediener der Abgleichvorrichtung erfolgen. Zumindest bedeutet jede Verwendung des Begriffs "automatisch", dass die betreffende Aktion aufgrund des Computerprogramms oder unter Kontrolle des Computerprogramms erfolgt.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder den Begriffen Steuerungsprogramm und Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind .

### Es zeigen

FIG 1 eine Vorrichtung zum Abgleich eines Rauchmelders gemäß dem hier vorgeschlagenen Ansatz, die sich von der beanspruchten Vorrichtung durch das Weglassen der mit den Rohrleitungsabschnitten verbunden Gehäuse im Abgleichsabschnitt unterscheidet;
FIG 2 eine Vorrichtung die sich ebenfalls von der beanspruchten Vorrichtung durch das Weglassen der Gehäuse unterscheidet, mittels derer in parallelen Abgleichsabschnitten sequentiell jeweils zumindest ein Rauchmelder abgleichbar ist,
FIG 3 einen Zustromabschnitt der Vorrichtung gemäß FIG 1 oder FIG 2,
FIG 4 die erfindungsgemäße Ausführungsform des Abgleichsabschnitts einer Vorrichtung gemäß FIG 1 oder FIG 2 und
FIG 5 eine von der Vorrichtung umfasste Steuerungseinheit mit einem mittels der Steuerungseinheit ausführbaren Steuerungsprogramm.

Die Darstellung in FIG 1 zeigt - schematisch vereinfacht - eine Vorrichtung 10 (Abgleichvorrichtung) zum automatischen Abgleich zumindest eines Rauchmelders 12. Die Vorrichtung 10 umfasst einen mit einem strömenden Aerosol (Testaerosol) 14 beaufschlagbaren und in FIG 1 im Längsschnitt gezeigten Kanal 16. Das Aerosol 14 wird beim Betrieb der Vorrichtung 10 mittels eines Aerosolgenerators 18 erzeugt und von diesem in das Innere des Kanals 16 abgegeben. Das Aerosol 14 ist in FIG 1 nur im Interesse einer zeichnerisch einfachen Darstellung zunächst als Wolke gezeigt. Tatsächlich verteilt sich ein Aerosol 14 bekanntlich gleichmäßig in dem jeweils zur Verfügung stehenden Volumen. Das Aerosol 14 wird mittels eingangsseitig zum Beispiel mittels eines Gebläses oder dergleichen (nicht gezeigt) in den Kanal 16 eingeleiteter Druckluft durch den Kanal 16 geleitet, so dass sich ein Aerosolstrom (Volumenstrom) ergibt, der in FIG 1 mittels der Blockpfeile veranschaulicht ist. Die Mehrzahl der Blockpfeile soll die sich beim Betrieb der Vorrichtung 10 einstellende gleichmäßige oder im Wesentlichen gleichmäßige Verteilung des Aerosols 14 in dem Volumenstrom durch den Kanal 16 veranschaulichen.

Die Vorrichtung 10 ist zum automatischen Abgleich zumindest eines Rauchmelders 12 bestimmt. Dieser zumindest eine Rauchmelder 12 wird im Folgenden als abzugleichender Rauchmelder 12 bezeichnet. Neben diesem zumindest einen abzugleichenden Rauchmelder 12 befindet sich zumindest ein weiterer Rauchmelder 12 in dem Kanal 16. Dieser ist bereits abgeglichen und wird zur Unterscheidung als Referenzmelder 20 bezeichnet. Der Referenzmelder 20 befindet sich bevorzugt, aber nicht notwendig, stromaufwärts des zumindest einen abzugleichenden Rauchmelders 12, nämlich bezüglich des Aerosolstroms stromaufwärts des zumindest einen abzugleichenden Rauchmelders 12. Der Ort des Zustroms des Aerosols 14 befindet sich stromaufwärts des Referenzmelders 20 und stromaufwärts des oder jedes abzugleichenden Rauchmelders 12. Der Referenzmelder 20 und der oder jeder abzugleichende Rauchmelder 12 befinden sich in einem im Folgenden als Abgleichsabschnitt 24 des Kanals 16 bezeichneten Kanalabschnitt stromabwärts eines durch den Ort des Zustroms des Aerosols 14 bestimmten Zustromabschnitt 22. Der Aerosolstrom passiert aufgrund der eingangsseitig in den Kanal 16 eingeleiteten Druckluft den Abgleichsabschnitt 24. Folglich dringt der Aerosolstrom durch den Kanal 16 in eine Messkammer des Referenzmelders 20 sowie eine Messkammer des oder jedes abzugleichenden Rauchmelders 12 ein und wird dort von der an sich bekannten Sensorik des Referenzmelders 20 bzw. Rauchmelders 12 erfasst. Im Gegensatz zur beanspruchten Erfindung ist bei der schematisch vereinfachten Darstellung der Vorrichtung 10 der Querschnitt des Kanals 16 zumindest im Bereich des Abgleichsabschnitts 24 konstant, so dass von konstanten oder zumindest im Wesentlichen konstanten Strömungsverhältnissen, insbesondere in Bezug auf Druckverteilung und Strömungsgeschwindigkeit, ausgegangen werden kann.

Mittels der Vorrichtung 10 ist optional ein gleichzeitiger Abgleich mehrerer abzugleichender Rauchmelder 12 möglich. Entsprechend zeigt die Darstellung in FIG 1 mit strichpunktierten Linien einen weiteren abzugleichenden Rauchmelder 12. Anstelle genau eines weiteren abzugleichenden Rauchmelders 12 kann in der Vorrichtung 10 je nach Längserstreckung des Kanals 16 eine Vielzahl abzugleichender Rauchmelder 12 platziert sein.

Im Interesse einer besseren Lesbarkeit der nachfolgenden Beschreibung wird diese auf Basis genau eines abzugleichenden Rauchmelders 12 in dem Kanal 16 fortgesetzt. Dann kann auf Formulierungen wie "zumindest ein abzugleichender Rauchmelder 12" verzichtet werden. Eine eventuelle Mehrzahl abzugleichender Rauchmelder 12 in dem Kanal 16 ist allerdings im Folgenden stets mitzulesen und als von der hier vorgelegten Beschreibung mit umfasst anzusehen.

Angesichts der Bezeichnung des bereits abzugleichenden Rauchmelders als Referenzmelder 20 kann der abzugleichende Rauchmelder 12 bei Erhalt der eindeutigen Unterscheidbarkeit im Folgenden kurz als Rauchmelder 12 bezeichnet werden.

Der Abgleich des Rauchmelders 12 fußt darauf, dass der Referenzmelder 20 bereits abgeglichen ist und dass der Rauchmelder 12 und der Referenzmelder 20 gleich oder im Wesentlichen gleich sind, zum Beispiel baugleich oder typgleich. Durch die gemeinsame Platzierung des Referenzmelders 20 und Rauchmelders 12 in dem Kanal 16 stromabwärts der Zuführung des Aerosols 14 sind beide demselben Aerosolstrom und zumindest im Wesentlichen derselben Aerosolkonzentration ausgesetzt.

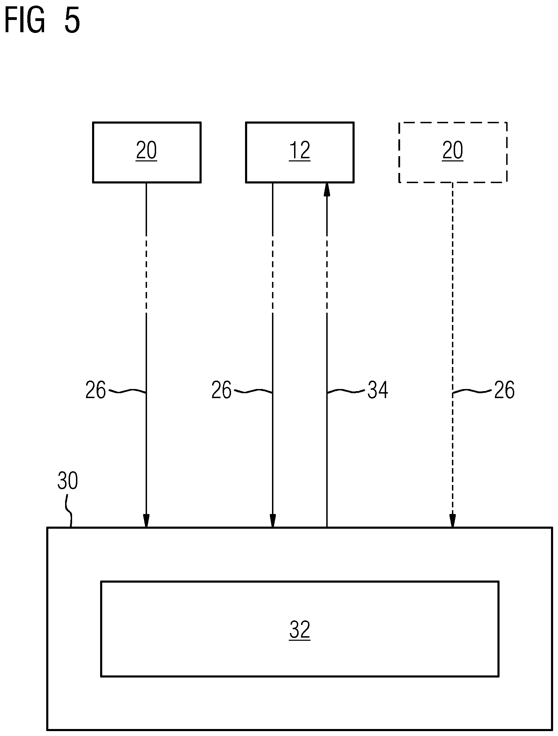

Aufgrund des Aerosols 14 erzeugt jeder Rauchmelder 12 und damit auch der Referenzmelder 20 ein Sensorsignal 26 (FIG 5), welches ein Maß für die Aerosolmenge in dessen Messkammer kodiert. Das Sensorsignal 26 des Referenzmelders 20 wird im Folgenden zur Unterscheidung als Referenzsignal 28 bezeichnet. Dieses wird zum Beispiel einer Steuerungseinheit 30 der Vorrichtung 10 zugeleitet. Dafür befinden sich im Innern des Kanals 16 zum Beispiel Kontaktelemente (nicht gezeigt), welche auch die für den Referenzmelder 20 vorgesehene Position bestimmen. Mittels der Kontaktelemente ist die Steuerungseinheit 30 kommunikativ mit dem Referenzmelder 20 verbindbar und über die kommunikative Verbindung erfolgt zumindest die Übermittlung des Referenzsignals 28 vom Referenzmelder 20 an die Steuerungseinheit 30. Das Referenzsignal 28 kann durch die Steuerungseinheit 30 zum Beispiel im Rahmen eines sogenannten Serviceprotokolls ausgelesen werden. Die Steuerungseinheit 30 umfasst in grundsätzlich an sich bekannter Art und Weise eine Verarbeitungseinheit in Form von oder nach Art eines Mikroprozessors sowie einen Speicher, in den ein beim Betrieb der Vorrichtung 10 mittels der Verarbeitungseinheit ausgeführtes Steuerungsprogramm 32 (FIG 5) geladen ist. Das Steuerungsprogramm 32 umfasst in grundsätzlich an sich bekannter Art und Weise Programmcodeanweisungen und definiert die Art der Verarbeitung des Referenzsignals 28 und die Generierung eines Abgleichsignals 34. Das Abgleichsignal 34 wird an den Rauchmelder 12 zu dessen Abgleich übermittelt, zum Beispiel ebenfalls mittels des Serviceprotokolls. Für die dafür notwendige kommunikative Verbindung zwischen der Steuerungseinheit 30 und dem Rauchmelder 12 befinden sich auch für den Rauchmelder 12 im Innern des Kanals 16 Kontaktelemente (nicht gezeigt), welche ebenfalls die für den Rauchmelder 12 vorgesehene Position bestimmen.

Die erwähnten Kontaktelemente (für den Referenzmelder 20 und den Rauchmelder 12) können sich an der Innenoberfläche des Kanals 16 befinden. Alternativ kann zum Beispiel auch vorgesehen sein, dass der Referenzmelder 20 und der Rauchmelder 12 auf einem Träger (nicht gezeigt) platzierbar und zum Abgleich des Rauchmelders 12 auf dem Träger platziert sind. Dann befinden sich die Kontaktelemente an dem Träger.

Bekanntlich erfolgt bei einem Rauchmelder 12 - und demnach ebenso bei dem als Referenzmelder 20 fungierenden Rauchmelder - die Erkennung von eventuellen Rauchpartikeln aufgrund einer Lichtstreuung an den Rauchpartikeln. An den Rauchpartikeln wird ein im Innern des Rauchmelders 12, 20 ausgesandter Prüflichtstrahl gestreut und gestreutes Licht gelangt zu einem lichtempfindlichen Sensor. Ein Alarm wird ausgelöst, wenn zumindest ein von dem Sensor generiertes und ggf. weiter verarbeitetes, zur Menge des einfallenden, an den Rauchpartikeln gestreuten Lichts proportionales Sensorsignal 26 einen definierten Schwellwert überschreitet.

Ein solches Sensorsignal 26 vom Referenzmelder 20 wird bei dem hier vorgeschlagenen Ansatz als Referenzsignal 28 verwendet. Das Referenzsignal 28 ist proportional zu der aufgrund des Aerosolstroms in dem Kanal 16 in den Referenzmelder 20 eingedrungenen Aerosolmenge. Bei einem typgleichen Rauchmelder 12 und einem im Wesentlichen konstanten Volumenstrom im Kanal 16 kann davon ausgegangen werden, dass in den Rauchmelder 12 aufgrund des Aerosolstroms im Kanal 16 dieselbe Aerosolmenge eindringt wie in den Referenzmelder 20. Folglich müsste das Sensorsignal 26 des Rauchmelders 12 dem Sensorsignal 26 (Referenzsignal 28) des Referenzmelders 20 entsprechen oder zumindest im Wesentlichen entsprechen. Eine eventuelle Abweichung, insbesondere eine einen vorgegebenen oder vorgebbaren Grenzwert überschreitende Abweichung, wird durch einen Abgleich des Rauchmelders 12 korrigiert.

Der Abgleich des Rauchmelders 12 auf Basis des vom Referenzmelder 20 erhältlichen Referenzsignals 28 kann auf unterschiedliche Art und Weise erfolgen. Einzelne zum Abgleich eines Rauchmelders 12 grundsätzlich in Frage kommende Möglichkeiten sind nachfolgend - lediglich beispielhaft und ohne Verzicht auf eine weitergehende Allgemeingültigkeit - erläutert:
Der Rauchmelder 12 kann mittels der Steuerungseinheit 30 in einen Abgleichmodus versetzt werden und dem Rauchmelder 12 kann dann durch die Steuerungseinheit 30 das Referenzsignal 28 als Abgleichsignal 34 übermittelt werden. Dann wird das Referenzsignal 28 mittels der Steuerungseinheit 30 im Grunde nur zum Rauchmelder 12 durchgeleitet. Der Rauchmelder 12 vergleicht intern das Abgleichsignal 34 mit dem von seiner eigenen Sensorik generierten Sensorsignal 26 und nimmt gegebenenfalls eine Korrektur vor, zum Beispiel eine Korrektur eines Abgleichsfaktors oder zumindest eines Abgleichsfaktors. Der Abgleichsfaktor oder der jeweilige Abgleichsfaktor ergibt sich zum Beispiel als Quotient des Referenzsignals 28 und des eigenen Sensorsignals 26 oder allgemein aufgrund einer vorgegebenen Verrechnung des Referenzsignals 28 und des eigenen Sensorsignals 26. Der Abgleich des Rauchmelders 12 ist erfolgt, sobald nach einer eventuellen Anpassung des Abgleichsfaktors der Rauchmelder 12 als Sensorsignal 26 das mit dem Abgleichsfaktor gewichtete interne Sensorsignal ausgibt. Alternativ kann vorgesehen sein, dass anhand des Verhältnisses von Referenzsignal 28 und eigenem Sensorsignal 26 eine Pulsdauer des im Innern des Rauchmelders 12 periodisch ausgesandten Prüflichtstrahls erhöht wird und/oder dass die Leistung der Prüflichtquelle angepasst wird. Zusätzlich oder alternativ können auch ein Offset, eine Verstärkung und/oder weitere Parameter angepasst werden.

Die Darstellung in FIG 2 zeigt eine Vorrichtung 10 gemäß FIG 1, bei der der Kanal 16 stromabwärts des Zustromabschnitts 22 nicht nur einen Abgleichsabschnitt 24, sondern zwei oder mehr parallele Abgleichsabschnitte 24 umfasst, zum Beispiel genau zwei parallele Abgleichsabschnitte 24. Parallel sind die beiden gezeigten Abgleichsabschnitte 24 in Bezug auf den Volumenstrom durch den Kanal 16. Bei mehreren Abgleichsabschnitten 24 sind diese also nicht notwendig räumlich parallel angeordnet, wenngleich dies eine vorteilhafte Ausführungsform darstellt, denn dann ist die Vorrichtung 10 einfach zu fertigen und zeichnet sich durch einen geringen Platzbedarf aus.

Ein an den Zustromabschnitt 22 anschließendes Zwischenstück 36 des Kanals 16 ist beweglich, zum Beispiel flexibel, und ermöglicht eine Verbindung des Zustromabschnitts 22 mit einem der beiden in FIG 2 gezeigten nachfolgenden Abgleichsabschnitte 24. Diese werden im Folgenden zur Unterscheidung als erster Abgleichsabschnitt 24 und zweiter Abgleichsabschnitt 24 bezeichnet. Beim Betrieb der Vorrichtung 10 strömt das Aerosol 14 durch die jeweils mit dem Zustromabschnitt 22 verbundenen Abgleichsabschnitte 24, also zum Beispiel zunächst durch den ersten Abgleichsabschnitt 24. Der oder jeder dort befindliche Rauchmelder 12 wird wie oben beschrieben abgeglichen. Während des Abgleichs kann der zweite Abgleichsabschnitt 24 bestückt werden, indem dort zumindest ein Rauchmelder 12 neben einem dort bereits befindlichen Referenzmelder 20 platziert wird. Nach dem Abgleich des oder jedes Rauchmelders 12 im ersten Abgleichsabschnitt 24 wird der Zustromabschnitt 22 mit dem zweiten Abgleichsabschnitt 24 verbunden, so dass jetzt dort der Abgleich stattfindet. Währenddessen kann der oder jeder jetzt abgeglichene Rauchmelder 12 aus dem ersten Abgleichsabschnitt 24 entfernt werden und durch einen oder mehrere zu abzugleichende Rauchmelder 12 ersetzt werden. Nach dem Abgleich des oder jedes Rauchmelders 12 im zweiten Abgleichsabschnitt 24 wird der Zustromabschnitt 22 wieder mit dem ersten Abgleichsabschnitt 24 verbunden und so weiter.

Mit der Verbindung des Zustromabschnitts 22 mit jeweils einem Abgleichsabschnitt 24 erfolgt auch der Anschluss der Kontaktstellen im jeweiligen Abgleichsabschnitt 24 an die Steuerungseinheit 30 (in FIG 2 nicht gezeigt; siehe FIG 1). Dies erfolgt zum Beispiel mittels dauerhafter Leitungsverbindungen zwischen der Steuerungseinheit 30 einerseits und allen Kontaktstellen jedes Abgleichsabschnitts 24 anderseits.

Anders als in FIG 2 gezeigt, kann für mehrere Abgleichsabschnitte 24 ein und derselbe Referenzmelder 20 verwendet werden. Dann befindet sich der Referenzmelder 20 vor der Verzweigungsstelle zu unterschiedlichen Abgleichsabschnitten 24.

Eine Vorrichtung 10 gemäß FIG 2 zeichnet sich dadurch aus, dass in einem von zumindest zwei Abgleichsabschnitten 24 des Kanals 16 zumindest ein Rauchmelder 12 gemäß dem hier beschriebenen Ansatz abgleichbar ist, während in zumindest einem weiteren Abgleichsabschnitt 24 des Kanals 16 zumindest ein Rauchmelder 12 zwecks späteren Abgleichs gemäß dem hier beschriebenen Ansatz platzierbar ist. Eine solche Vorrichtung 10 erhöht den Durchsatz beim Abgleich von Rauchmeldern 12 erheblich, weil der Abgleich einerseits und das Bestücken der Vorrichtung 10 andererseits zeitlich parallel erfolgen können. Eine solche Vorrichtung 10 kann mehr als zwei Abgleichsabschnitte 24 umfassen. Genau zwei Abgleichsabschnitte 24 können - wie in FIG 2 gezeigt - nebeneinander oder übereinander angeordnet sein. Mehr als zwei Abgleichsabschnitte 24 können zum Beispiel mit parallelen Mittellängsachsen regelmäßig beabstandet entlang einer Zylindermantelfläche angeordnet sein, wie dies beispielsweise bei einer Revolvertrommel der Fall ist.

Beim kontinuierlichen Abgleich von Rauchmeldern 12 mittels einer Vorrichtung 10 gemäß FIG 1 oder einer Vorrichtung 10 gemäß FIG 2 erfolgt bedarfsweise von Zeit zu Zeit auch ein Austausch des jeweiligen Referenzmelders 20. Eine "Lebensdauer" eines Referenzmelders 20 ist insbesondere abhängig von der geforderten Genauigkeit, der jeweiligen Aerosolkonzentration, dem Aufbau des Referenzmelders 20 sowie dem Durchsatz beim Abgleich in der Fabrikation und kann zum Beispiel rund vierundzwanzig Stunden, aber auch bis zu mehrere Wochen betragen. Als neuer Referenzmelder 20 kann grundsätzlich auch ein mittels des hier beschriebenen Ansatzes abgeglichener Rauchmelder 12 fungieren.

Bei einer Ausführungsform ist neben dem bereits erwähnten Referenzmelder 20 die Verwendung von zumindest einem weiteren Referenzmelder 20 vorgesehen. Die beiden in FIG 1 gezeigten (für FIG 2 gilt das Nachfolgende entsprechend) Referenzmelder 20 werden zur Unterscheidung als erster Referenzmelder 20 und zweiter Referenzmelder 20 bezeichnet. Bevorzugt ist der erste Referenzmelder 20 im Abgleichsabschnitt 24 stromaufwärts des oder jedes Rauchmelders 12 und der zweite Referenzmelder 20 im selben Abgleichsabschnitt 24 stromabwärts des oder jedes Rauchmelders 12 platziert. Bei mehr als zwei Referenzmeldern 20 ist bevorzugt zumindest ein Referenzmelder 20 im Abgleichsabschnitt 24 stromaufwärts des oder jedes Rauchmelders 12 und zumindest ein Referenzmelder 20 im selben Abgleichsabschnitt 24 stromabwärts des oder jedes Rauchmelders 12 platziert. Die Referenzmelder 20 müssten als bereits abgeglichene Rauchmelder gleiche oder zumindest im Wesentlichen gleiche Sensorsignale 26 (Referenzsignal 28) liefern. Solange eine Gleichheit oder zumindest ausreichende Gleichheit nicht gegeben ist, kann nicht von einer gleichmäßigen Verteilung des Aerosols 14 in dem Abgleichsabschnitt 24 des Kanals 16 ausgegangen werden. Bei einer auf einer Verwendung von zwei oder mehr Referenzmeldern 20 basierenden Vorrichtung 10 vergleicht die Steuerungseinheit 30 demnach die von den Referenzmeldern 20 erhaltenen Referenzsignale 28 und der Abgleich beginnt erst, wenn eine ausreichende Gleichheit der Referenzsignale 28 gegeben ist. Eine zusätzliche oder alternative Möglichkeit zum automatischen Start des Abgleichs besteht darin, dass die Steuerungseinheit 30 das Sensorsignal 26 (Referenzsignal 28) zumindest eines Referenzmelders 20 und/oder das Sensorsignal 26 zumindest eines Rauchmelders 12 überwacht und der Abgleich erst beginnt, wenn eine Schwankungsbreite des jeweiligen Sensorsignals 26 während einer Zeitspanne mit einer vorgegebenen oder vorgebbaren Dauer unter einen vorgegebenen oder vorgebbaren Grenzwert fällt, wenn sich also das Sensorsignal 26 nicht mehr oder nur noch wenig ändert. Auch dann kann davon ausgegangen werden, dass eine für den Abgleich ausreichende gleichmäßige Verteilung des Aerosols 14 in dem Kanal 16 und im Abgleichsabschnitt 24 gegeben ist.

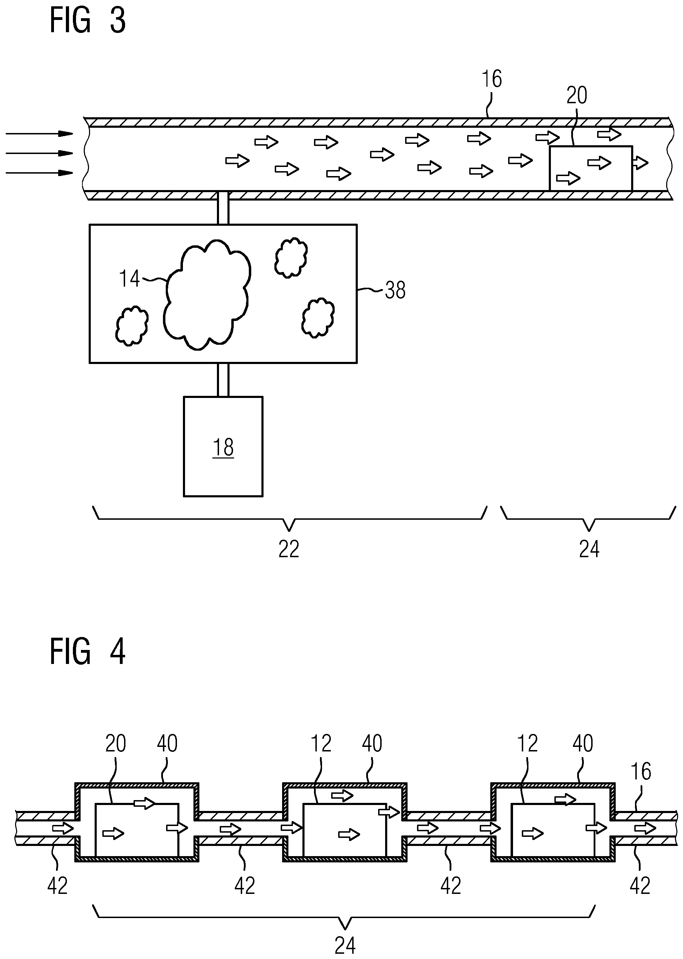

Die Darstellung in FIG 3 zeigt, dass optional im Bereich des Zustromabschnitts 22 des Kanals 16 (FIG 1; FIG 2) außerhalb des Kanals 16 ein als Puffervolumen zwischen dem Aerosolgenerator 18 und dem Kanal 16 fungierender Behälter 38 vorgesehen sein kann, in welchen der Aerosolgenerator 18 das Aerosol 14 abgibt. Das Aerosol 14 wird zwecks Beruhigung und Homogenisierung (Konzentration, Wirbel, Partikelverteilung) in den Behälter 38 geleitet. Der für den Abgleich benötigte Aerosolfluss wird mittels einer Pumpe oder eines Regelventils (nicht gezeigt) dem Behälter 38 entnommen und gelangt stromabwärts des Behälters 38 in den Abgleichsabschnitt 24 des Kanals 16. Der Behälter 38 kann sich - wie gezeigt - im Zustromabschnitt 22 des Kanals 16 befinden oder den Zustromabschnitt 22 des Kanals 16 oder einen Teil des Zustromabschnitts 22 des Kanals 16 bilden.

Die Darstellung in FIG 4 zeigt die erfindungsgemäße Ausbildung des Kanals 16 zumindest im Bereich des Abgleichsabschnitts 24. Danach weist der Kanal 16 nicht - wie dies in den vorangehenden Figuren gezeigt ist - entlang seiner gesamten Längserstreckung einen uniformen Querschnitt auf. Vielmehr besteht der Kanal 16 aus einzelnen durchströmbaren und jeweils gleich großen Gehäusen 40 zur Aufnahme jeweils eines Rauchmelders 12, also entweder zur Aufnahme eines als Referenzmelder 20 fungierenden Rauchmelders oder eines abzugleichenden Rauchmelders 12, sowie aus die Gehäuse 40 untereinander verbindenden Rohrleitungsabschnitten 42. Aufgrund der den jeweiligen Rauchmelder 12 (oder Referenzmelder 20) eng umgebenden Gehäuse 40 füllt das durch den Kanal 16 strömende Aerosol 14 (in FIG 4 nicht gezeigt) nach kurzer Zeit die Messkammern aller Melder 12, 20 gleichmäßig aus, so dass ausreichend gleiche Verhältnisse für den Abgleich des zumindest einen Rauchmelders 12 hergestellt sind. Somit wird eine kurze Stabilisierungszeit erreicht und der Aerosolverbrauch verringert. Ein Abgleichsabschnitt 24 mit mit Rohrleitungsabschnitten 42 verbundenen Gehäusen 40 zur Aufnahme jeweils eines Melders 12, 20 kommt optional sowohl für die Ausführungsform gemäß FIG 1 wie auch für die Ausführungsform gemäß FIG 2 in Betracht. Alle Varianten zeichnen sich dadurch aus, dass das Aerosol 14 forciert sowohl durch den oder jeden Referenzmelder 20 wie auch den oder jeden abzugleichenden Rauchmelder 12 strömt. Darüber hinaus ergeben sich - anders als bei einem Kanal 16 der in FIG 1 gezeigten Art - weniger komplizierte Strömungs- und Druckverhältnisse, so dass auf jeden Rauchmelder 12 dieselben Strömungsverhältnisse wirken.

Die Darstellung in FIG 5 zeigt abschließend - schematisch stark vereinfacht - die Steuerungseinheit 30 und deren Verarbeitung des Referenzsignals 28 sowie die Generierung des Abgleichsignals 34. In einen Speicher der Steuerungseinheit 30 ist in grundsätzlich an sich bekannter Art und Weise das bereits erwähnte Steuerungsprogramm 32 geladen. Dieses wird beim Betrieb der Vorrichtung 10 mittels einer Verarbeitungseinheit in Form von oder nach Art eines Mikroprozessors der Steuerungseinheit 30 ausgeführt. Unter Kontrolle des Steuerungsprogramms 32 wird beispielsweise das von dem Referenzmelder 20 erhaltene Referenzsignal 28 als Abgleichsignal 34 an den zumindest einen abzugleichenden Rauchmelder 12 ausgegeben. Jeder Rauchmelder 12, der das Abgleichsignal 34 erhält, gleicht sich aufgrund des Abgleichsignals 34 gewissermaßen selbst ab, wie dies oben bereits erläutert wurde. Alternativ kann die Ermittlung eines Abgleichsfaktors eines Rauchmelders 12 auch durch die Steuerungseinheit 30 erfolgen. Dann verarbeitet die Steuerungseinheit 30 das Referenzsignal 28 und das Sensorsignal 26 jedes zu abzugleichenden Rauchmelders 12. Die Steuerungseinheit 30 bildet zum Beispiel den Quotienten und/oder einen oder mehrere Korrekturfaktoren und übermittelt diesen in Form des Abgleichsignals 34 an den jeweiligen Rauchmelder 12. Der Rauchmelder 12 implementiert dann zum Beispiel den mit dem Abgleichsignal 34 übermittelten Wert als internen Abgleichsfaktor oder verwendet diesen zur Anpassung einer Pulsdauer des im Innern des Rauchmelders 12 periodisch ausgesandten Prüflichtstrahls und/oder zur Anpassung der Leistung der Prüflichtquelle.

Bei einer besonderen, optionalen Ausführungsform kann auch vorgesehen sein, dass die Steuerungseinheit 30 automatisch die Aerosolkonzentration beeinflusst, zum Beispiel durch entsprechende Ansteuerung des Aerosolgenerators 18 und/oder durch Aktivierung einer oder mehrerer schaltbarer Verdünnungsstufen. Dies ermöglicht einen Abgleich von verschiedenen Rauchmeldertypen und/oder Rauchmeldern 12 mit einem großen Dynamikbereich.

Bei mehreren Referenzmeldern 20 umfasst das Steuerungsprogramm 32 optional zum Beispiel Programmcodeanweisungen zum Vergleich der von den Referenzmeldern 20 erhältlichen Referenzsignale 28. Erst wenn diese während eines vorgegebenen oder vorgebbaren Zeitraums in vorgegebenen oder vorgebbaren Grenzen übereinstimmen, also zum Beispiel indem eine Differenz zweier Referenzsignale 28 einen vorgegebenen oder vorgebbaren Schwellwert während des Zeitraums nicht überschreitet, erfolgt der Abgleich des oder jedes abzugleichenden Rauchmelders 12, indem erst dann automatisch das Abgleichsignal 34 erzeugt wird. Zusätzlich oder alternativ kann der Beginn des Abgleichs optional auch vom Sensorsignal 26 eines abzugleichenden Rauchmelders 12 abhängen. Dann wird mittels der Steuerungseinheit 30 und unter Kontrolle des Steuerungsprogramms 32 automatisch überwacht, ob sich das jeweilige Sensorsignal 26 während eines vorgegebenen oder vorgebbaren Zeitraums nicht oder nur wenig ändert. Wenn dies erkannt wurde, erfolgt der Abgleich, indem erst dann automatisch das Abgleichsignal 34 erzeugt wird. Gemäß einer weiteren optionalen Ausführungsform kann vorgesehen sein, dass der Beginn des Abgleichs vom Ablauf einer Wartezeit mit einer vorgegebenen oder vorgebbaren Dauer abhängt. Das Steuerungsprogramm 32 umfasst dann Programmcodeanweisungen zur Einhaltung der Wartezeit.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren und eine nach dem Verfahren arbeitende Vorrichtung 10 zum Abgleich eines Rauchmelders 12, wobei der Abgleich mittels eines bereits abgeglichenen und als Referenzmelder 20 fungierenden Rauchmelders erfolgt.

## Patentansprüche

1. Verfahren zum automatischen Abgleich zumindest eines Rauchmelders (12),
wobei der zumindest eine abzugleichende Rauchmelder (12) in einem mit einem strömenden Aerosol (14) beaufschlagten Kanal (16) platziert ist,
wobei sich in dem Kanal (16) zusammen mit dem zumindest einen abzugleichenden Rauchmelder (12) ein als Referenzmelder (20) fungierender, bereits abgeglichener Rauchmelder befindet,
wobei der Kanal (16) zur Aufnahme des zumindest einen abzugleichenden Rauchmelders (12) sowie des Referenzmelders (20) jeweils ein Gehäuse (40) aufweist,
wobei die von dem Kanal (16) umfassten Gehäuse (40) mittels Rohrleitungsabschnitten (42) untereinander verbunden sind, derart, dass jede Ausgangsseite eines Gehäuses (40) mit einer Eingangsseite eines entlang des Kanals (16) nachfolgenden Gehäuses (40) verbunden ist, und
wobei der zumindest eine abzugleichende Rauchmelder (12) mittels von dem Referenzmelder (20) erhältlicher Daten (28) abgeglichen wird.

2. Verfahren nach Anspruch 1, wobei sich der Referenzmelder (20) in dem Kanal (16) stromaufwärts des zumindest einen abzugleichenden Rauchmelders (12) befindet.

3. Verfahren nach Anspruch 1 oder 2,
wobei sich in dem Kanal (16) und stromabwärts des zumindest einen abzugleichenden Rauchmelders (12) ein als weiterer Referenzmelder (20) fungierender, bereits abgeglichener Rauchmelder befindet und
wobei von dem weiteren Referenzmelder (20) erhältliche Daten (28) zur Prüfung und/oder Korrektur des Abgleichs des zumindest einen abzugleichenden Rauchmelders (12) verwendet werden.

4. Verfahren nach Anspruch 1, 2 oder 3,
wobei in zumindest einem zu einem Kanalabschnitt (24) mit dem zumindest einen abzugleichenden Rauchmelder (12) parallelen weiteren Kanalabschnitt (24) zumindest ein abzugleichender Rauchmelder (12) platziert ist und
wobei der Kanalabschnitt (24) oder der oder ein weiterer Kanalabschnitt (24) in den Aerosolstrom bewegt wird.

5. Verfahren nach einem der vorangehenden Ansprüche,
wobei eine zeitliche Änderung eines von dem Referenzmelder (20) und/oder dem zumindest einen abzugleichenden Rauchmelder (12) erhältlichen Sensorsignals (26) zur Prüfung und/oder Korrektur des Abgleichs des zumindest einen abzugleichenden Rauchmelders (12) verwendet wird.

6. Vorrichtung (10) zum automatischen Abgleich zumindest eines Rauchmelders (12),
wobei die Vorrichtung (10) einen mit einem strömenden Aerosol (14) beaufschlagten Kanal (16) umfasst,
wobei in dem Kanal (16) der zumindest eine abzugleichende Rauchmelder (12) platziert ist,
wobei in dem Kanal (16) zusammen mit dem zumindest einen abzugleichenden Rauchmelder (12) ein als Referenzmelder (20) fungierender, bereits abgeglichener Rauchmelder platziert ist,
wobei der Kanal (16) zur Aufnahme des zumindest einen abzugleichenden Rauchmelders (12) sowie des Referenzmelders (20) jeweils ein Gehäuse (40) aufweist,
wobei die von dem Kanal (16) umfassten Gehäuse (40) mittels Rohrleitungsabschnitten (42) untereinander verbunden sind, derart, dass jede Ausgangsseite eines Gehäuses (40) mit einer Eingangsseite eines entlang des Kanals (16) nachfolgenden Gehäuses (40) verbunden ist, und
wobei mittels der Vorrichtung (10) von dem Referenzmelder (20) erhältliche Daten (28) an den zumindest einen abzugleichenden Rauchmelder (12) zu dessen Abgleich übermittelbar sind.

7. Vorrichtung (10) nach Anspruch 6, wobei sich der Referenzmelder (20) in dem Kanal (16) stromaufwärts des zumindest einen abzugleichenden Rauchmelders (12) befindet.

8. Vorrichtung (10) nach Anspruch 6 oder 7,
wobei sich in dem Kanal (16) und stromabwärts des zumindest einen abzugleichenden Rauchmelders (12) ein als weiterer Referenzmelder (20) fungierender, bereits abgeglichener Rauchmelder befindet und
wobei von dem weiteren Referenzmelder (20) erhältliche Daten (28) zur Prüfung und/oder Korrektur des Abgleichs des zumindest einen abzugleichenden Rauchmelders (12) verwendet werden.

9. Vorrichtung (10) nach einem der Ansprüche 6 bis 8,
wobei der Kanal (16) einen Zustromabschnitt (22), in dem ein Aerosol (14) in den Kanal (16) einleitbar ist, sowie einen Abgleichsabschnitt (24) und zumindest einen weiteren, parallelen Abgleichsabschnitt (24) umfasst,
wobei in jedem Abgleichsabschnitt jeweils zumindest ein abzugleichender Rauchmelder (12) platzierbar ist und
wobei der Zustromabschnitt (22) wahlweise entweder mit dem Abgleichsabschnitt (24) oder dem zumindest einen weiteren Abgleichsabschnitt (24) verbindbar ist.

10. Computerprogramm (32) mit Programmcodemitteln zur Steuerung oder zur Steuerung und Überwachung der Vorrichtung (10) gemäß einem der Ansprüche 6 bis 9,
wobei unter Kontrolle des Computerprogramms (32) Sensorsignale (26) des Referenzmelders (20) und/oder des zumindest einen abzugleichenden Rauchmelders (12) zum Abgleich des zumindest einen abzugleichenden Rauchmelders (12) gemäß Anspruch verarbeitet werden.

11. Vorrichtung (10) nach einem der Ansprüche 6 bis 9, mit einer Steuerungseinheit (30) und einem Speicher, in den ein Computerprogramm (32) nach Anspruch 10 geladen ist, das beim Betrieb der Vorrichtung (10) durch die Steuerungseinheit (30) ausgeführt wird.

## Claims

1. Method for automatically adjusting at least one smoke detector (12),
wherein the at least one smoke detector (12) to be adjusted is positioned in a channel (16) applied with a flowing aerosol (14),
wherein a smoke detector which is already adjusted and functions as a reference detector (20) is disposed in the channel (16) together with the at least one smoke detector (12) to be adjusted,
wherein the channel (16) for receiving the at least one smoke detector (12) to be adjusted and the reference detector (20) has a housing (40) in each case and
wherein the housings (40) included in the channel (16) are connected to one another by means of pipe sections (42) such that each output side of a housing (40) is connected to an input side of a housing (40) which follows along the channel (16)
wherein the at least one smoke detector (12) to be adjusted is adjusted by means of data (28) available from the reference detector (20).

2. Method according to claim 1, wherein the reference detector (20) is disposed in the channel (16) upstream of the at least one smoke detector (12) to be adjusted.

3. Method according to claim 1 or 2,
wherein a smoke detector which is already adjusted and functions as a further reference detector (20) is disposed in the channel (16) and downstream of the at least one smoke detector (12) to be adjusted and
wherein data (28) available from the further reference detector (20) is used to check and/or correct the adjustment of the at least one smoke detector (12) to be adjusted.

4. Method according to claim 1, 2 or 3,
wherein at least one smoke detector (12) to be adjusted is positioned in at least one further channel segment (24) which is parallel to a channel segment (24) with the at least one smoke detector (12) to be adjusted, and
wherein the channel segment (24) or the or a further channel segment (24) is moved in the aerosol flow.

5. Method according to one of the preceding claims,
wherein a temporal change in a sensor signal (26) available from the reference detector (20) and/or the at least one smoke detector (12) to be adjusted is used to check and/or correct the adjustment of the at least one smoke detector (12) to be adjusted.

6. Device (10) for automatically adjusting at least one smoke detector (12),
wherein the device (10) comprises a channel (16) which can be applied with a flowing aerosol (14),
wherein the at least one smoke detector (12) to be adjusted can be positioned in the channel (16),
wherein a smoke detector which is already adjusted and functions as a reference detector (20) can be positioned in the channel (16) together with the at least one smoke detector (12) to be adjusted,
wherein the channel (16) for receiving the at least one smoke detector (12) to be adjusted and the reference detector (20) has a housing (40) in each case and
wherein the housings (40) included in the channel (16) are connected to one another by means of pipe sections (42) such that each output side of a housing (40) is connected to an input side of a housing (40) which follows along the channel (16), and
wherein data (28) available from the reference detector (20) can be transferred by means of the device (10) to the at least one smoke detector (12) to be adjusted for its adjustment.

7. Device (10) according to claim 6, wherein the reference detector (20) is disposed in the channel (16) upstream of the at least one smoke detector (12) to be adjusted.

8. Device (10) according to claim 6 or 7,
wherein a smoke detector which is already adjusted and functions as a further reference detector (20) is disposed in the channel (16) and downstream of the at least one smoke detector (12) to be adjusted and
wherein data (28) available from the further reference detector (20) is used to check and/or correct the adjustment of the at least one smoke detector (12) to be adjusted.

9. Device (10) according to one of claims 6 to 8,
wherein the channel (16) comprises an inflow segment (22), in which an aerosol (14) can be introduced into the channel (16), and an adjustment segment (24) and at least one further, parallel adjustment segment (24),
wherein at least one smoke detector (12) to be adjusted can be positioned in each adjustment segment in each case and
wherein the inflow segment (22) can optionally either be connected to the adjustment segment (24) or to the at least one further adjustment segment (24).

10. Computer program (32) with program code means for controlling or for controlling and monitoring the device (10) according to one of claims 6 to 9,
wherein under control of the computer program (32), sensor signals (26) of the reference detector (20) and/or of the at least one smoke detector (12) to be adjusted are processed in order to adjust the at least one smoke detector (12) to be adjusted according to claim 1.

11. Device (10) according to one of claims 6 to 9, with a control unit (30) and a storage device, into which a computer program (32) according to claim 10 is loaded, which is run by the control unit (30) during operation of the device (10).

## Revendications

1. Procédé de réglage automatique d'au moins un détecteur de fumées (12),
dans lequel l'au moins un détecteur de fumées (12) à régler est placé dans un canal (16) alimenté avec un aérosol (14) en écoulement,
dans lequel, dans le canal (16), conjointement avec l'au moins un détecteur de fumées à régler (12), se trouve un détecteur de fumées déjà réglé servant de détecteur de référence (20),
dans lequel le canal (16) comprend un boîtier (40), pour le logement de l'au moins un détecteur de fumées à régler (12) ainsi que du détecteur de fumées (20),
dans lequel les boîtiers (40) inclus dans le canal (16) sont reliés entre eux au moyen de portions de canalisations (42), de façon à ce que chaque côté de sortie d'un boîtier (40) soit relié avec un côté d'entrée d'un boîtier (40) suivant le long du canal (16) et
dans lequel l'au moins un détecteur de fumées à régler (12) est réglé au moyen de données (28) provenant du détecteur de référence (20).

2. Procédé selon la revendication 1, dans lequel le détecteur de référence (20) se trouve dans le canal (16) en amont de l'au moins un détecteur de fumées à régler (12).

3. Procédé selon la revendication 1 ou 2,
dans lequel, dans le canal (16) et en aval de l'au moins un détecteur de fumées à régler (12), se trouve un détecteur de fumées déjà réglé servant de détecteur de référence (20) supplémentaire et
dans lequel, les données (28) provenant du détecteur de référence (20) supplémentaire sont utilisées pour la vérification et/ou la correction du réglage de l'au moins un détecteur de fumées à régler (12).

4. Procédé selon la revendication 1, 2 ou 3,
dans lequel, dans au moins une portion de canal (24) supplémentaire, parallèle à une portion de canal (24) avec l'au moins un détecteur de fumées à régler (12), est placé au moins un détecteur de fumées à régler (12) et
dans lequel la portion de canal (24) ou une portion de canal (24) supplémentaire est déplacée dans le flux d'aérosol.

5. Procédé selon l'une des revendications précédentes, dans lequel une modification temporelle d'un signal de capteur (26) provenant du détecteur de référence (20) et/ou de l'au moins un détecteur de fumées à régler (12) est utilisée pour la vérification et/ou la correction du réglage de l'au moins un détecteur de fumées à régler (12).

6. Dispositif (10) pour le réglage automatique d'au moins un détecteur de fumées (12),
dans lequel le dispositif (10) comprend un canal (16) pouvant être alimenté avec un aérosol (14) en écoulement,
dans lequel, dans le canal (16), est placé l'au moins un détecteur de fumées à régler (12),
dans lequel, dans le canal (16), conjointement avec l'au moins un détecteur de fumées à régler (12), est placé un détecteur de fumées déjà réglé servant de détecteur de référence (20),
dans lequel le canal (16) comprend un boîtier (40) pour le logement de l'au moins un détecteur de fumées à régler (12) ainsi que du détecteur de référence (20),
dans lequel les boîtiers (40) inclus dans le canal (16) sont reliés entre eux au moyen de portions de canalisations (42), de façon à ce que chaque côté de sortie d'un boîtier (40) soit relié avec un côté d'entrée d'un boîtier (40) suivant le long du canal (16) et
dans lequel, au moyen du dispositif (10), les données (28) provenant du détecteur de référence (20) peuvent être transmises à l'au moins un détecteur de fumées à régler (12) pour son réglage.

7. Dispositif (10) selon la revendication 6, dans lequel le détecteur de référence (20) se trouve dans le canal (16) en amont de l'au moins un détecteur de fumées à régler (12).

8. Dispositif (10) selon la revendication 6 ou 7,
dans lequel, dans le canal (16) et en aval de l'au moins un détecteur de fumées à régler (12), se trouve un détecteur de fumées déjà réglé servant de détecteur de référence (20) supplémentaire et
dans lequel les données (28) provenant du détecteur de référence (20) supplémentaire sont utilisées pour la vérification et/ou la correction du réglage de l'au moins un détecteur de fumées à régler (12).

9. Dispositif (10) selon l'une des revendications 6 à 8, dans lequel le canal (16) comprend une portion d'alimentation (22) dans laquelle un aérosol (14) peut être introduite dans le canal (16), ainsi qu'une portion de réglage (24) et au moins une portion de réglage (24) supplémentaire parallèle,
dans lequel, dans chaque portion de réglage, peut être placé au moins un détecteur de fumées à régler (12) et
dans lequel la portion d'alimentation (22) peut être reliée soit avec la portion de réglage (24) soit avec l'au moins une portion de réglage (24) supplémentaire.

10. Programme informatique (32) avec des moyens de code informatique pour le contrôle ou pour le contrôle et la surveillance du dispositif (10) selon l'une des revendications 6 à 9,
dans lequel, sous le contrôle du programme informatique (32), les signaux de capteur (26) du détecteur de référence (20) et/ou de l'au moins un détecteur de fumées à régler (12) sont traités pour le réglage de l'au moins un détecteur de fumées à régler (12) selon la revendication 1.

11. Dispositif (10) selon l'une des revendications 6 à 9, avec une unité de commande (30) et une mémoire, dans laquelle est chargé un programme informatique (32) selon la revendication 10, qui, lors du fonctionnement du dispositif (10), est exécuté par l'unité de commande (30).
